(19)

Europäisches Patentamt
European Patent Office
Office européen des brevets

(11) **EP 4 549 403 A1**

(12) **EUROPEAN PATENT APPLICATION**

(43) Date of publication:
**07.05.2025   Bulletin 2025/19**

(21) Application number: **24197846.9**

(22) Date of filing: **02.09.2024**

(51) International Patent Classification (IPC):
**C01G 53/82** (2025.01)      **H01M 4/00** (2006.01)

(52) Cooperative Patent Classification (CPC):
**C01G 53/82; H01M 4/00;** C01P 2006/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **30.10.2023   KR 20230147292**

(71) Applicant: **ECOPRO BM CO., LTD.**
**Cheongju-si, Chungcheongbuk-do 28117 (KR)**

(72) Inventors:
• **JUNG, Kuhyun**
  **28116 Cheongju-si, Chungcheongbuk-do (KR)**

• **LEE, Dongwook**
  **28116 Cheongju-si, Chungcheongbuk-do (KR)**
• **KONG, Bo Hyun**
  **28116 Cheongju-si, Chungcheongbuk-do (KR)**
• **JO, Min Su**
  **28116 Cheongju-si, Chungcheongbuk-do (KR)**
• **PARK, A Ram**
  **28116 Cheongju-si, Chungcheongbuk-do (KR)**
• **GWON, Yong Hwan**
  **28116 Cheongju-si, Chungcheongbuk-do (KR)**

(74) Representative: **Beck & Rössig**
**European Patent Attorneys**
**Denninger Str. 169**
**81925 München (DE)**

(54) **POSITIVE ELECTRODE ACTIVE MATERIAL FOR SODIUM SECONDARY BATTERY, METHOD OF PREPARING THE SAME, AND SODIUM SECONDARY BATTERY INCLUDING THE SAME**

(57)     The present invention provides a method of preparing a positive electrode active material for a sodium secondary battery, including: a) inputting a sodium composite transition metal oxide and a water washing solution into a reactor and stirring the reactants to dissolve residual sodium on the surface of the sodium composite transition metal oxide in the water washing solution; b) inputting cobalt salt into the reactor and performing stirring to coprecipitate cobalt hydroxide onto the sodium composite transition metal oxide particles; and c) heat-treating the sodium composite transition metal oxide particles on which the cobalt hydroxide is formed to form a cobalt coating layer on the particles.

In addition, the present invention provides a positive electrode active material for a sodium secondary battery, which is prepared by the above preparation method and includes a plurality of sodium composite transition metal oxide particles including a cobalt oxide coating layer formed on the surface and/or inside the particles, wherein the plurality of sodium composite transition metal oxide particles have a relative standard deviation (RSD) of less than 30 of the atomic molar ratio (Co/M) of cobalt to total metals (M) excluding sodium at 4 random points selected through EDS mapping analysis.

**FIG. 1A**

EP 4 549 403 A1

**Description**

BACKGROUND

**1. Field of the Invention**

The present invention relates to a positive electrode active material for a sodium secondary battery, a method of preparing the same, and a sodium secondary battery including the same.

**2. Discussion of Related Art**

Lithium-ion secondary batteries have been widely used as energy storage devices in various electronic technology fields. Recently, as the demand for lithium-ion secondary batteries has rapidly increased, sodium-ion secondary batteries are attracting attention to replace lithium, an expensive metal. Sodium-ion secondary batteries are one of the next-generation materials with high potential for application to secondary batteries because they have a similar intercalating/deintercalating reaction operating principle as lithium-ion secondary batteries.

The positive electrode active material for sodium-ion secondary batteries is typically a layered transition metal oxide that has a simple structure, excellent electrochemical performance, and is easy to synthesize. During the sintering process when preparing positive electrode active materials, the residual amount of sodium by-products present in the form of $Na_2CO_3$ and NaOH on the particle surface increases, which causes gas generation due to electrolyte side reactions during battery operation, a decrease in the capacity and output of the positive electrode material, and a decrease in the lifespan and stability of the battery.

A water washing process is essential to remove sodium by-products remaining on the surface of the positive electrode active material. However, when a water washing process to remove sodium by-products is performed, there is a problem that the lifespan characteristics are rapidly reduced due to surface defects of the positive electrode active material, so a particle surface coating of the positive electrode active material is applied after water washing. However, in the existing coating process, the coating was formed in an island shape on the surface of the positive electrode active material particle, and it was difficult to form a uniform coating layer over the entire particle surface. Meanwhile, a non-uniform coating layer acts as a resistance layer, which does not improve capacity before/after coating and deteriorates the electrochemical properties of the cell.

Accordingly, a method is required to improve the performance of the positive electrode active material of sodium-ion batteries and to improve the deterioration of lifespan characteristics due to the water washing process.

SUMMARY

The present invention is directed to providing a manufacturing method that improves cell performance such as surface stability, capacity, and lifetime characteristics by performing the water washing process and coating process simultaneously and further, by forming a uniform and capacitive coating layer on the entire surface of the positive electrode active material particles in the preparation of positive electrode active material for sodium secondary batteries.

In addition, the present invention is directed to simplifying the process and improving process costs by reducing the input amount of basic material (NaOH) used in the coating layer formation process by using residual sodium on the surface of the sodium composite transition metal oxide.

In addition, by controlling the sodium equivalent (Na/M) and high-Mn transition metal composition input when preparing a sodium composite transition metal oxide, the total amount of residual sodium and the ratio of residual sodium compounds (NaOH/$Na_2CO_3$) on the surface of the sodium transition metal oxide are controlled to specific ranges, and thus the additional input amount of basic material (NaOH) used in the coating layer formation process may be optimized.

In addition, the present invention is directed to providing a method for coating a positive electrode active material for a sodium secondary battery, which applies a process differently depending on the coating amount of the positive electrode active material, so that the coating layer may be uniformly formed regardless of the change in coating amount.

In addition, the present invention is directed to providing a positive electrode active material for a sodium secondary battery prepared by the above preparation method, in which a uniform and capacitive coating layer is formed on the entire surface of the positive electrode active material particle.

One embodiment of the present invention provides a method of preparing a positive electrode active material for a sodium secondary battery, including a) inputting a sodium composite transition metal oxide and a water washing solution into a reactor and stirring the reactants to dissolve residual sodium on the surface of the sodium composite transition metal oxide in the water washing solution; b) inputting a cobalt salt into the reactor and performing stirring to co-precipitate cobalt hydroxide onto the sodium composite transition metal oxide particles; and c) heat-treating the sodium composite transition metal oxide particles on which the cobalt hydroxide is formed to form a cobalt coating layer on the particles.

In operation a), the sodium composite transition metal oxide may be prepared by mixing a transition metal hydroxide precursor and a sodium compound in an Na/M (M=total metals excluding Na) molar ratio of 0.6 to 0.72 and sintering the mixture.

In operation a), the sodium composite transition metal oxide may include a combination of sodium hydroxide (NaOH) and sodium carbonate ($Na_2CO_3$) as sodium by-products remaining on the surface of the oxide particles, and the sodium composite transition metal oxide may include residual sodium in a weight ratio of sodium hydroxide to sodium carbonate ($NaOH/Na_2CO_3$) of 50 to 110.

In operation a), the pH of the reactants may be increased from pH 6 to 8 to pH 10 to 12 while stirring proceeds in the reactor.

In operation a), the sodium composite transition metal oxide may have a residual sodium content (TTS: total sodium, ppm) of 3,000 to 20,000 ppm.

Operation b) may include b1) when a content of cobalt element included in the cobalt oxide coating layer is 2 mol% or less based on the total metals (M) excluding sodium of the sodium composite transition metal oxide, inputting the cobalt salt and stirring without inputting a sodium-containing basic material; and b2) when a content of cobalt element included in the cobalt oxide coating layer is more than 2 mol% based on the total metals (M) excluding sodium of the sodium composite transition metal oxide, inputting a cobalt salt (CS1) and stirring without inputting the sodium-containing basic material when a cumulative cobalt element content (Co'/M) input into the reactor is 0 to 2 mol%, and inputting and stirring a cobalt salt (CS2) and the sodium-containing basic material together from the point in time when the cumulative cobalt element content (Co'/M) input into the reactor exceeds 2 mol%.

The cobalt hydroxide co-precipitation of operation b) further may include b3) stopping the input of the cobalt salt or the cobalt salt and sodium-containing basic material, and stirring the material input into the reactor for 1 to 10 min after operation b1) or operation b2).

The residual sodium in operation a) and the sodium-containing basic material in operation b2) may be materials that are partially or fully ionized in the water washing solution and exhibit basicity, and the cobalt salt in operation b) may be a material that is partially or fully ionized in the water washing solution and exhibits acidity.

In addition, another embodiment of the present invention provides a positive electrode active material for a sodium secondary battery including a plurality of sodium composite transition metal oxide particles including a cobalt oxide coating layer formed on the surface and/or inside the particles, wherein the plurality of sodium composite transition metal oxide particles have a relative standard deviation (RSD) of less than 30 of the atomic molar ratio (Co/M) of cobalt to total metals (M) excluding sodium at 4 random points selected through EDS (energy-dispersive X-ray spectroscopy) mapping analysis .

The plurality of sodium composite transition metal oxide particles may have an RSD of 2 to 20 of the atomic molar ratio (Co/M) of cobalt to total metals (M) excluding sodium at 4 random points selected through EDS mapping analysis.

The sodium composite transition metal oxide may be a sodium manganese-based oxide including at least sodium, nickel, and manganese.

The sodium composite transition metal oxide may be represented by the following Chemical Formula 1.

$$[\text{Chemical Formula 1}] \qquad Na_aNi_xM1_yM2_zMn_{1-x-y-z}O_2$$

in Chemical Formula 1,
M1 is Co or Fe,
M2 is at least one selected from Co, P, Sr, Ba, Ti, Zr, Mn, Al, W, Ce, Hf, Ta, Cr, F, Mg, Cr, V, Fe, Zn, Si, Y, Ga, Sn, Mo, Ge, Nd, B, Nb, Gd, and Cu,
M1 and M2 are different elements, and

$$0.50 \leq a \leq 0.80,\ 0.05 \leq x \leq 0.45,\ 0 \leq y \leq 0.45,\ 0 \leq z \leq 0.1,\ \text{and}\ 0.55 \leq 1\text{-x-y-z} \leq 0.85.$$

The cobalt oxide coating layer may include sodium cobalt oxide ($NaCoO_2$), cobalt oxide ($Co_2O_3$), or a combination thereof.

The content of cobalt element (Co) included in the cobalt oxide coating layer may be 0.1 to 10 mol% based on the total metals (M) excluding sodium of the sodium composite transition metal oxide,

The plurality of sodium composite transition metal oxide particles including a cobalt oxide coating layer formed on the surface and/or inside the particles may include a residual sodium content of 10,000 ppm or less.

Still another embodiment of the present invention provides a positive electrode for a sodium secondary battery including the positive electrode active material, and a sodium secondary battery including the positive electrode; a negative electrode; and an electrolyte.

# EP 4 549 403 A1

BRIEF DESCRIPTION OF THE DRAWINGS

FIGS. 1A and 1B show the low magnification (1.000 K) EDS mapping results and high magnification (5.000 K) EDS mapping results for the positive electrode active material prepared in Example 1.

FIGS. 2A and 2B show the low magnification (1.000 K) EDS mapping results and high magnification (5.000 K) EDS mapping results for the positive electrode active material prepared in Comparative Example 1.

FIG. 3 shows a 1st charge/discharge graph of the sodium secondary batteries manufactured in Example 1, Comparative Example 1, and Reference.

DETAILED DESCRIPTION OF EXEMPLARY EMBODIMENTS

Advantages and features of the present invention and methods of achieving the same should become clear from embodiments described in detail below with reference to the accompanying drawings. However, the present invention is not limited to the embodiments disclosed below, but may be embodied in various different forms, the embodiments merely serve to complete the disclosure of the present invention and to fully inform the scope of the invention to those skilled in the art to which the invention pertains, and the present invention is defined only by the scope of the claims.

Unless otherwise defined, all terms (including technical and scientific terms) used in the present specification may be used with meanings commonly understood by those of ordinary skill in the art to which the present invention belongs. Throughout the specification, when a part is said to "include" a component, this means that the part may further include other components rather than excluding other components unless specifically stated to the contrary. A singular expression also includes a plural expression unless the context clearly indicates otherwise.

The present invention provides a method of preparing a positive electrode active material for a sodium secondary battery, in which a water washing process and a coating process are performed simultaneously, and furthermore, a coating layer is uniformly formed over the entire surface of the positive electrode active material particles and has capacity, the method including a) inputting a sodium composite transition metal oxide and a water washing solution into a reactor and stirring the reactants to dissolve residual sodium on the surface of the sodium composite transition metal oxide in the water washing solution; b) inputting a cobalt salt into the reactor and performing stirring to co-precipitate cobalt hydroxide onto the sodium composite transition metal oxide particles; and c) heat-treating the sodium composite transition metal oxide particles on which the cobalt hydroxide is formed to form a cobalt coating layer on the particles. Accordingly, the surface stability of the positive electrode active material may be enhanced and electrochemical performance such as capacity and lifespan characteristics may be improved.

Operation a) preferentially uses the sodium by-products remaining on the surface of the positive electrode active material without inputting an additional basic material in order to apply the optimal pH for cobalt hydroxide co-precipitation, and is an operation in which the sodium composite transition metal oxide and the water washing solution are input into the reactor and the reactants are stirred to dissolve the sodium by-products (residual sodium) remaining on the surface of the sodium composite transition metal oxide in the water washing solution. Accordingly, by dissolving the sodium by-products remaining on the surface of the sodium composite transition metal oxide particles in the water washing solution, the pH 11-12 optimized for cobalt hydroxide co-precipitation may be controlled, and as there is no additional input of a basic solution or ammonium solution, process simplification and process costs may be reduced.

In operation a), the stirring of the reactants may be performed at 100 to 300 rpm for 1 to 10 min, specifically at 200 to 400 rpm for 3 to 7 min, or at 300 to 500 rpm 4 to 6 min. Accordingly, the pH of the reactants increases from pH 6 to 8 to pH 10 to 12 while stirring proceeds in the reactor, and the optimal pH for co-precipitation may be achieved using only residual sodium without inputting additional basic materials in the co-precipitation process, which is the next operation.

The sodium composite transition metal oxide may be prepared by mixing a transition metal hydroxide precursor and a sodium compound so that the molar ratio of Na/M (M=total metals excluding Na) is 0.6 to 0.72, specifically 0.63 to 0.72, 0.65 to 0.71, 0.66 to 0.71, preferably 0.68 to 0.71 and sintering the mixture.

The prepared sodium composite transition metal oxide may be a high-Mn sodium nickel manganese oxide (NNMO) represented by the following Chemical Formula 1.

[Chemical Formula 1]    $Na_aNi_xM1_yM2_zMn_{1-x-y-z}O_2$

In Chemical Formula 1,
M1 is Co or Fe,
M2 is at least one selected from Co, P, Sr, Ba, Ti, Zr, Mn, Al, W, Ce, Hf, Ta, Cr, F, Mg, Cr, V, Fe, Zn, Si, Y, Ga, Sn, Mo, Ge, Nd, B, Nb, Gd, and Cu,
M1 and M2 are different elements, and

$$0.50 \leq a \leq 0.80,\ 0.05 \leq x \leq 0.45,\ 0 \leq y \leq 0.45,\ 0 \leq z \leq 0.1,\ \text{and}\ 0.55 \leq 1\text{-}x\text{-}y\text{-}z \leq 0.85.$$

As the proportion of Mn in the high-Mn transition metal composition increases, the residual sodium content on the surface of the oxide particle tends to increase after preparing the sodium composite transition metal oxide, and in the present invention, the amount of basic materials used in Co co-precipitation coating can be reduced by maximally utilizing the sodium by-products remaining on the surface.

The sodium composite transition metal oxide may include a combination of sodium hydroxide (NaOH) and sodium carbonate ($Na_2CO_3$) as sodium by-products remaining on the surface of the oxide particles.

Referring to the reaction scheme below, NaOH in the residual sodium is strongly basic and may be used to replace the basic material (NaOH) input additionally to satisfy the optimal pH of 11 to 12 during co-precipitation coating, and this process has the effect of removing residual sodium, but $Na_2CO_3$ in the residual sodium is weakly basic, so a large amount of residual sodium is required to satisfy the optimal pH of 11 to 12 for co-precipitation, and accordingly, when the total amount of residual sodium increases, it becomes difficult to achieve uniform coating during the co-precipitation coating. Therefore, in order to perform the co-precipitation process using NaOH, which may be used as a basic material in the co-precipitation process, in the residual sodium, the present invention is directed to preparing/using the sodium composite transition metal oxide so as to have i) an appropriate total residual sodium amount, and ii) a specific ($NaOH/Na_2CO_3$) weight ratio.

$$NaOH(aq.)\text{-}\text{-}\text{-}\text{-}\text{-}\text{-}\text{-}\text{-}\text{-}\text{-}\text{-}\text{-}>>(Na^+) + (OH^-) \qquad (1)$$

$$Na_2CO_3 + H_2O <\text{-}\text{-}\text{-}\text{-}\text{-}>> (2Na^+) + (HCO_3^-) + (OH^-) \qquad (2)$$

$$(HCO_3^-) + H_2O <\text{-}\text{-}\text{-}\text{-}\text{-}\text{-}>>(H_2CO_3) + (OH^-) \qquad (3)$$

In reaction scheme (1), NaOH is a strong base, so it is present as $Na^+$ and $OH^-$ ions in the water washing solution, in reaction scheme (2), $Na_2CO_3$ is a salt of a strong base and a weak acid, so it dissolves in the water washing solution and is weakly basic, and in reaction reaction scheme (3), $HCO_3^-$ is a weak base that reacts with water again to generate $OH^-$.

The sodium composite transition metal oxide may include residual sodium in a weight ratio of sodium hydroxide to sodium carbonate ($NaOH/Na_2CO_3$) of 50 to 110, for example 65 to 110, 65 to 105, 70 to 110, or 70 to 105.

When the ($NaOH/Na_2CO_3$) weight ratio exceeds the design range, the proportion of NaOH, which is a relatively strong base, increases, and thus the pH of the water washing solution in the water washing operation a) may increase excessively (excessively exceeding the optimal pH of 11 to 12 for co-precipitation). Accordingly, even when cobalt hydroxide is added alone in co-precipitation operation b) (operation b1), uniform cobalt coating is difficult because co-precipitation proceeds in a state exceeding the optimal pH of 11 to 12 for co-precipitation. In addition, the total amount of residual sodium increases excessively, making it difficult for coating to proceed uniformly due to the increased amount of residual sodium. Conversely, when the ($NaOH/Na_2CO_3$) weight ratio is below the design range, as the proportion of $Na_2CO_3$, which is a relatively weak base, increases, the pH of the water washing solution in the water washing operation a) may decrease excessively (below the optimal pH of 11 to 12 for co-precipitation). When only cobalt hydroxide is added in co-precipitation operation b) (operation b1),because co-precipitation is performed under conditions that do not reach the optimal pH of 11 to 12 for co-precipitation, it is difficult for cobalt coating to proceed. Accordingly, as in the related art, the additional input amount of basic material (NaOH) used in the coating layer formation process increases, so it is difficult to use residual sodium, and process complexity and process costs increase.

The sodium composite transition metal oxide may have a residual sodium content (TTS: total sodium, ppm) of 3,000 to 20,000 ppm, for example, 5,000 to 20,000 ppm, 8,000 to 20,000 ppm, 10,000 to 20,000 ppm, 12,000 to 20,000 ppm, 13,000 to 18,000 ppm, or 14,000 to 17,000 ppm. Accordingly, in order to perform the co-precipitation using NaOH, which may be used as a basic material in the co-precipitation, in the residual sodium, it is possible to prepare the sodium composite transition metal oxide so as to have i) an appropriate total residual sodium amount, and ii) a specific ($NaOH/Na_2CO_3$) weight ratio.

The water washing solution may be a water washing solution commonly used for washing the sodium composite transition metal oxide with water, and may be, for example, ethanol, distilled water, or deionized water.

The reactor may be used without limitation as long as it is a co-precipitation reaction reactor that is generally used in the preparation of positive electrode active materials, and for example, a batch type reactor, Couette-Taylor reactor, and the like may be used. When using the Couette-Taylor reactor, co-precipitation of cobalt hydroxide may be performed faster than with general reactors such as a batch reactor, which has the advantage of saving process time.

Operation b) is for uniformly co-precipitating cobalt hydroxide on the surface of the sodium composite transition metal oxide particles and is an operation of inputting cobalt salt into the reactor and performing stirring to co-precipitate the cobalt hydroxide onto the sodium composite transition metal oxide particles, and accordingly, the co-precipitation may be applied differently depending on the cumulative co-precipitation amount (coating amount) of cobalt hydroxide.

Specifically, in operation b), b1) when a content of cobalt element included in the cobalt oxide coating layer is 2 mol% or less based on the total metals (M) excluding sodium of the sodium composite transition metal oxide, an operation of inputting the cobalt salt and stirring without inputting a sodium-containing basic material may be performed.

In addition, in operation b), b2) when a content of cobalt element included in the cobalt oxide coating layer is more than 2 mol% based on the total metals (M) excluding sodium of the sodium composite transition metal oxide, an operation of inputting a cobalt salt (CS1) and stirring without inputting the sodium-containing basic material when a cumulative cobalt element content (Co'/M) input into the reactor is 0 to 2 mol%, and inputting and stirring a cobalt salt (CS2) and the sodium-containing basic material together from the point in time when the cumulative cobalt element content (Co'/M) input into the reactor exceeds 2 mol% may be performed.

Here, the total metals (M) excluding sodium of the sodium composite transition metal oxide may include transition metals included in the cobalt oxide coating layer.

Meanwhile, the cobalt salt is a cobalt-containing raw material, and the cobalt-containing raw material may be a cobalt-containing acetate, nitrate, sulfate, halide, sulfide, hydroxide, oxide, or oxyhydroxide, and specifically, $Co(OH)_2$, $CoOOH$, $Co(OCOCH_3)_2 \cdot 4H_2O$, $Co(NO_3)_2 \cdot 6H_2O$, $CoSO_4$, $CoSO_4 \cdot 7H_2O$, or a combination thereof, but is not limited thereto.

The basic solution may be hydroxide of an alkali metal or alkaline earth metal, such as $NaOH$, $KOH$, or $Ca(OH)_2$, a hydrate thereof, or a combination thereof. The basic compound may also be used in the form of an aqueous solution, and in this case, the solvent may be water or a mixture of water and an organic solvent (specifically, alcohol, and the like) that is homogeneously miscible with water.

The basic solution is added to adjust the pH of the reaction solution in the reactor, and may be added in an amount such that the pH of the reaction solution in the reactor is 11 to 12 during co-precipitation of the cobalt hydroxide.

The co-precipitation reaction may be performed at a temperature of 40 °C to 70 °C in an inert atmosphere such as nitrogen or argon, and the co-precipitation time for co-precipitating the cobalt hydroxide may range from 1 min to 1 h, more preferably from 5 min to 1 h, more preferably from 10 min to 50 min. By adjusting the co-precipitation time of the cobalt hydroxide within the above range, it is possible to effectively form a coating layer on the particle surface of the sodium composite transition metal oxide to improve surface defects and enhance battery performance, while minimizing film resistance due to the formation of the coating layer, and in addition, the existing long co-precipitation process time of about 2 h may be shortened, making it possible to simplify the process, reduce process costs, and form a uniform coating layer.

By stirring the sodium composite transition metal oxide with a water washing solution through the above process and forming cobalt hydroxide on the particle surface of the sodium composite transition metal oxide, the water washing process for removing sodium by-products remaining on the particle surface and the coating process for improving surface defects and enhancing performance may be performed simultaneously to simplify the process, reduce production time and process costs, and form a uniform coating layer over the entire particle surface.

Operation c) is for forming a cobalt coating layer on the surface of the sodium composite transition metal oxide particle, and is an operation of heat treating the sodium composite transition metal oxide particle on which the cobalt hydroxide is formed.

The heat treatment may be performed at 500 to 900 °C, more preferably at 600 to 900 °C, and even more preferably at 700 to 800 °C. By performing the heat treatment at a temperature within the above range, a coating layer including sodium cobalt oxide in a layered structure may be formed on the particle surface.

During the heat treatment, a coating source may be further mixed and heat treated. The coating source may be a coating source used for coating the surface of sodium composite transition metal oxide particles, and may include, for example, at least one selected from the group consisting of B, Al, F, W, Mo, Ti, and Nb, but is not limited thereto.

Through the above process, cobalt hydroxide on the particle surface of the sodium composite transition metal oxide is converted into capacitive (sodium) cobalt oxide, thereby enhancing surface stability and capacity characteristics.

Another embodiment of the present invention provides a positive electrode active material for a sodium secondary battery. The positive electrode active material includes a plurality of sodium composite transition metal oxide particles including a cobalt oxide coating layer formed on the surface and/or inside the particles, and the plurality of sodium composite transition metal oxide particles may have an RSD of less than 30, specifically, 2 to 20, 2 to 15, 2 to 10, 2 to 5, or 2 to 4 of the atomic molar ratio (Co/M) of cobalt to total metals (M) excluding sodium at 4 random points selected through EDS mapping analysis.

Accordingly, a uniform and capacitive coating layer can be formed on the entire surface of the positive electrode active material particle. When the RSD of the atomic molar ratio Co/M does not satisfy the above-mentioned range, the non-uniform coating layer acts as a resistance layer, so there is no effect of improving capacity before and after coating, and further, battery characteristics may deteriorate.

Meanwhile, the RSD, also called the coefficient of variation, represents the relative size of the standard deviation to the average value and may be calculated by dividing the standard deviation by the arithmetic mean (standard deviation / average x 100). In the present invention, as an indicator for confirming whether the cobalt coating layer formed on the surface of a plurality of sodium composite transition metal oxide particles is formed uniformly, through EDS mapping analysis, the standard deviation and average of the atomic molar ratio (Co/M) of cobalt to the total metals (M) calculated at 4 random points including the plurality of oxide particles may be calculated to obtain the relative standard deviation (standard deviation) / average × 100).

The sodium composite transition metal oxide may be an NNMO-based sodium manganese-based oxide including at least sodium, nickel, and manganese. The sodium manganese-based oxide is a high-manganese-based (high-Mn) oxide containing 55 mol% or more of manganese among total metals excluding sodium, and the content of manganese among the metals excluding sodium may be 55 mol% or more, 60 mol% or more, or 65 mol% or more, and the upper limit is not particularly limited, but for example, it may be 85 mol% or less, 80 mol% or less, or 75 mol% or less. As the content of manganese among metals excluding sodium increases, it has the advantage of being able to exhibit high capacity in a high-voltage operating environment, and may increase price competitiveness by reducing both nickel and cobalt concentrations.

The sodium composite transition metal oxide may be present in the form of secondary particles in which at least one primary particle is aggregated, and the oxide particles may have an average particle diameter (D50) of 2 to 15 $\mu$m, for example, 4 to 10 $\mu$m, but is not limited thereto. In this case, the electrode density may be increased to enhance the energy density per unit volume of the electrode.

The sodium composite transition metal oxide may be represented by the following Chemical Formula 1.

[Chemical Formula 1]     $Na_aNi_xM1_yM2_zMn_{1-x-y-z}O_2$

In Chemical Formula 1,
M1 is Co or Fe,
M2 is at least one selected from Co, P, Sr, Ba, Ti, Zr, Mn, Al, W, Ce, Hf, Ta, Cr, F, Mg, Cr, V, Fe, Zn, Si, Y, Ga, Sn, Mo, Ge, Nd, B, Nb, Gd, and Cu,
M1 and M2 are different elements, and

$$0.50 \leq a \leq 0.80,\ 0.05 \leq x \leq 0.45,\ 0 \leq y \leq 0.45,\ 0 \leq z \leq 0.1,\ \text{and}\ 0.55 \leq 1\text{-}x\text{-}y\text{-}z \leq 0.85.$$

The sodium composite transition metal oxide of Chemical Formula 1 may have a molar ratio (Na/M) of sodium (Na) to total metals (M) excluding sodium of 0.5 to 0.8. In Chemical Formula 1, when the Na content corresponding to a is less than 0.5, the capacity may be reduced, when the content is more than 0.8, the position of the sodium ion changes, and thus an O3-type crystal structure may be exhibited, and O3-type positive electrode active material may be more sensitive to lower atmospheric and moisture stability and synthesis conditions (temperature, atmosphere, and the like) compared to the P2-type. More preferably, Na may satisfy $0.60 \leq a \leq 0.80$, $0.60 \leq a \leq 0.75$, or $0.65 \leq a \leq 0.75$.

The cobalt oxide coating layer may be formed by surface Co coating and internal Co diffusion of the plurality of sodium composite transition metal oxide particles. Accordingly, by forming a uniform and capacitive coating layer on the entire surface of a positive electrode active material for a sodium secondary battery, surface stability may be enhanced, and battery performance such as capacity and lifespan characteristics may be improved.

The content of cobalt element (Co) included in the cobalt oxide coating layer may be 0.1 to 10 mol%, for example 0.5 to 7 mol%, 0.5 to 5 mol%, 0.5 to 4.5 mol%, or 0.5 to 4 mol%, based on the total metals (M) excluding sodium of the sodium composite transition metal oxide.

A plurality of sodium composite transition metal oxide particles including a cobalt oxide coating layer formed on the surface and/or inside the particles may include a residual sodium content (TTS: total sodium, ppm) of 10,000 ppm or less, for example 2,000 to 10,000 ppm, 2,000 to 7,000 ppm, or 2,000 to 5,000 ppm.

The plurality of sodium composite transition metal oxide particles may include a residual sodium content (TTS: total sodium, ppm) of 20,000 ppm or less, for example 8,000 to 20,000 ppm, 8,000 to 15,000 ppm, or 8,000 to 10,000 ppm before forming (including) the cobalt oxide coating layer.

Meanwhile, the residual sodium content of the plurality of sodium composite transition metal oxide particles before forming (including) the coating layer may be generally measured without performing a water washing process.

Still another embodiment of the present invention provides a positive electrode for a sodium secondary battery including the positive electrode active material, and a sodium secondary battery.

The positive electrode includes a positive electrode current collector and a positive electrode active material layer located on the positive electrode current collector, and the positive electrode active material according to one aspect of the present invention is present in the positive electrode active material layer.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 μm, and fine irregularities may be formed on the surface of the current collector, thereby increasing the adhesive strength of a positive electrode active material. For example, the positive electrode current collector may be provided in various forms such as a film, a sheet, a foil, a net, a porous body, a foam, a nonwoven body, etc.

In addition, the positive electrode active material layer may be a layer including the above-described positive electrode active material along with a conductive material and a binder.

Here, the conductive material is used to provide conductivity to the electrode, and may be used without particular limitation as long as it has conductivity without causing chemical changes in the positive electrode active material. Non-limiting examples of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative. The conductive material may typically be included in an amount of 1% to 30 wt% based on the total weight of the positive electrode active material layer.

In addition, the binder is a material that serves to enhance the adhesion between positive electrode active material particles and the adhesion between the positive electrode active material and the current collector. Non-limiting examples of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof. The binder may typically be included in an amount of 1% to 30 wt% based on the total weight of the positive electrode active material layer.

The positive electrode according to one embodiment of the present invention may be manufactured according to a conventional method of manufacturing a positive electrode for a sodium secondary battery, except for using the positive electrode active material described above. For example, a positive electrode may be manufactured by applying a slurry for forming a positive electrode active material layer including a positive electrode active material and, optionally, a binder and a conductive material on a positive electrode current collector, and then drying and rolling it. According to another example, the positive electrode may be manufactured by casting the slurry for forming the positive electrode active material layer onto a separate support and then laminating the film obtained by peeling the positive electrode active material layer from the support on the positive electrode current collector.

Yet another aspect of the present invention provides an electrochemical device including the above-described positive electrode. Here, the electrochemical device may be, specifically, a battery, a capacitor, and more specifically, a sodium secondary battery.

A sodium secondary battery includes a positive electrode, a negative electrode located opposite the positive electrode, a separator interposed between the positive electrode and the negative electrode, and an electrolyte. In addition, a sodium secondary battery may include a battery container (case) that accommodates an electrode assembly including the positive electrode, the negative electrode, and the separator, and a sealing member that seals the battery container.

At this time, depending on the shape of the battery container (case), the sodium secondary battery may be classified as a can-type sodium secondary battery in which the electrode assembly is built into a metal can and a pouch-type sodium secondary battery in which the electrode assembly is built into a pouch made of a sheet such as an aluminum laminate.

In particular, in the case of a pouch-type sodium secondary battery using the positive electrode including the positive electrode active material according to various embodiments of the present invention, as the possibility of side reactions between the positive electrode active material and the electrolyte is low, there is an advantage in that it is possible to improve stability during storage and/or operation and at the same time reduce gas generation.

Hereinafter, the present invention will be described in detail through examples, but these are intended to describe the present invention in more detail, and the scope of the present invention is not limited to the following examples.

**Examples**

**Preparation Example 1: Preparation of positive electrode active material**

(Example 1)

a) Preparation of sodium composite transition metal oxide

A sodium compound $Na_2CO_3$ was added to an $Ni_{0.35}Mn_{0.65}(OH)_2$ precursor in an amount of Na/M = 0.70 equivalents, and heat-treated at 950 °C in an air atmosphere for 12 h to obtain sodium nickel manganese-based oxide positive electrode active material powder ($Na_{0.67}Ni_{0.35}Mn_{0.65}O_2$ powder).

b) Cobalt hydroxide co-precipitation

DIW and $Na_{0.67}Ni_{0.35}Mn_{0.65}O_2$ were input into a 5 L batch reactor and stirred at 300 rpm for 5 min.

Subsequently, while maintaining the reactor at 25 °C, 300 rpm, and pH 11 to 12, cobalt hydroxide was co-precipitated for 10 min by adjusting an input amount of an aqueous cobalt sulfate solution until the Co/M (=Ni+Mn) atomic molar ratio reached 2 mol%.

Subsequently, while maintaining the reactor at 25 °C, 300 rpm, and pH 11 to 12, cobalt hydroxide was co-precipitated for 30 min by adjusting an input amount of an aqueous cobalt sulfate solution and an aqueous NaOH solution until the Co/M (=Ni+Mn) atomic molar ratio reached 3 mol%.

Stirring was performed in the reactor at 300 rpm for another 5 min, and then the obtained particles were separated and dried in a vacuum oven at 110 °C for 24 h.

c) Formation of cobalt oxide coating layer

The dried particle powder was put into an alumina crucible and heat treated at 800 °C for 12 h in an air atmosphere to prepare a sodium composite transition metal oxide positive electrode active material with a cobalt oxide coating layer formed on the surface of the particles.

(Comparative Example 1)

A sodium composite transition metal oxide positive electrode active material with a cobalt oxide coating layer was prepared in the same manner as in Example 1, except that operation b) was performed as follows.

b) Cobalt hydroxide co-precipitation

DIW was input into a 5L batch reactor, 23.9 g of 1 M NaOH solution was input, and then the mixture was stirred at a temperature of 25 °C and a stirring speed of 300 rpm for 15 min to reach a pH of 11 to 12. Subsequently, $Na_{0.67}Ni_{0.35}Mn_{0.65}O_2$ was input and stirred at 300 rpm.

Subsequently, while maintaining the reactor at 25 °C, 300 rpm, and pH 11 to 12, cobalt hydroxide was co-precipitated for 60 min by adjusting an input amount of an aqueous cobalt sulfate solution until the Co/M (=Ni+Mn) atomic molar ratio reached 3.4 mol%.

The reactor was further stirred at 300 rpm for 15 min, and the obtained particles were separated and dried in a vacuum oven at 110 °C for 24 h.

(Reference)

$Na_{0.67}Ni_{0.35}Mn_{0.65}O_2$ powder prepared in operation a) of Example 1 was used as a positive electrode active material.

**Preparation Example 2: Manufacture of sodium secondary battery**

30 g of 90 wt% of the prepared positive electrode active material, 5.5 wt% of carbon black, and 4.5 wt% of a PVdF binder were dispersed in N-methyl-2 pyrrolidone (NMP) to prepare a positive electrode slurry. The positive electrode slurry was uniformly applied on an aluminum thin film having a thickness of 15 $\mu$m and vacuum dried at 135 °C to manufacture a positive electrode for a sodium secondary battery.

A sodium secondary battery (coin cell) was manufactured using a sodium metal plate as a counter electrode to the positive electrode, a porous polyethylene membrane (Celgard 2300, thickness: 25 $\mu$m) as a separator, and an electrolyte in which $NaPF_6$ was present at a concentration of 1.15 M in a solvent in which ethylene carbonate and ethyl methyl carbonate were mixed in a volume ratio of 3:7.

**Experimental Examples**

Experimental Example 1: Co coating uniformity evaluation (RSD analysis)

After sampling the sample on carbon tape, analysis was performed with a working distance of 15, an acceleration voltage of 15 kV, and KCPS 110-130. During analysis, after analysis of 1 cut in a random section at low magnification (x1.000k) and 4 cuts in a random section at high magnification (x5.000k), the atomic % values of cobalt, Ni, and Mn were obtained, and then the Co/(Ni+Mn) atomic ratio (Co mol%) was obtained. Thereafter, the Co mol% RSD of four random cuts at high magnification was calculated. The calculation results are shown in Table 1 below.

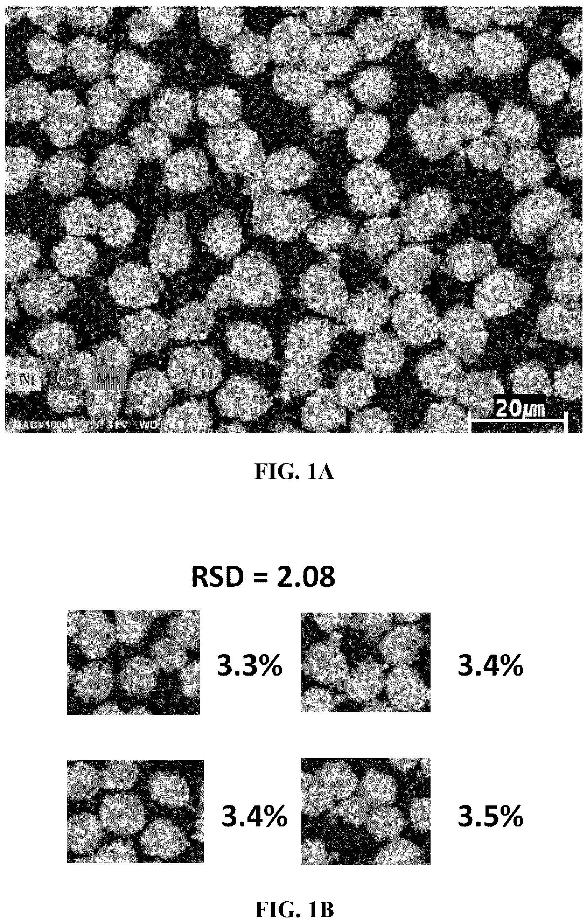

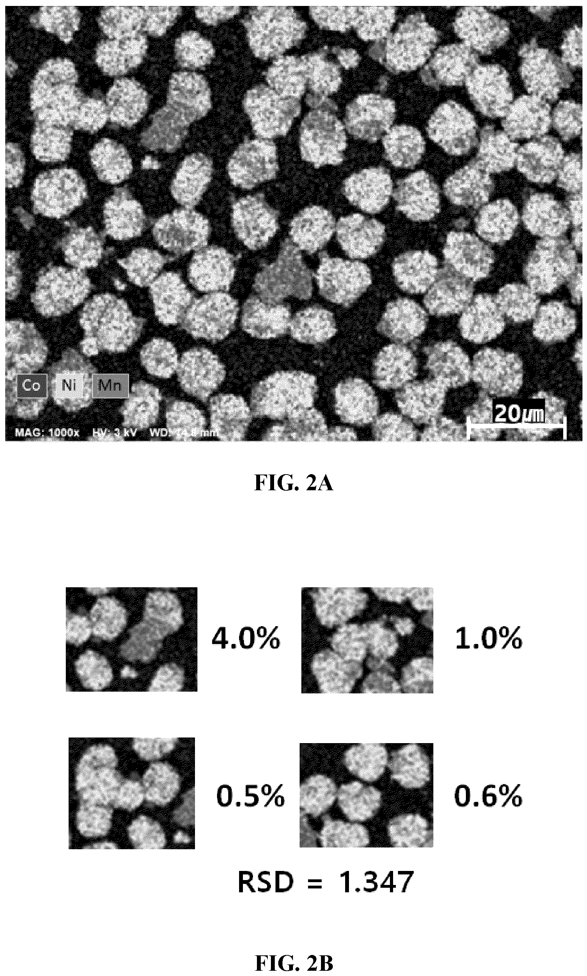

EDS results are shown in FIGS. 1A, 1B, 2A and 2B.

[Table 1]

|  | Overall average Co mol% | 1st point Co mol% | 2nd point Co mol% | 3rd point Co mol% | 4th point Co mol% | 1st to 4th point relative standard deviation |
|---|---|---|---|---|---|---|
| Example 1 | 3.4 | 3.3 | 3.4 | 3.4 | 3.5 | 2.08 |
| Comparative Example 1 | 3.4 | 4.0 | 1.0 | 0.5 | 0.6 | 94.5 |

Referring to FIGS. 1A, 1B, 2A and 2B and Table 1, it was confirmed that the coating uniformity of the Co-coated positive electrode active material to which the preparation method of the present invention was applied was improved, and the 4-point RSD was reduced to 2.1 when analyzing EDS Co mol%. On the other hand, in the case of Comparative Example 1 using the conventional coating method, the RSD value was found to be 94.5, and it is predicted that the non-uniformly formed coating layer acts as a resistance layer, making it difficult to see the effect of improving capacity before and after coating, and cell characteristics deteriorated.

Experimental Example 2: Evaluation of Co coating uniformity by adjusting the total amount of residual Na and compound ratio before coating (RSD analysis)

a) A Co-coated positive electrode active material was prepared in the same manner as in Example 1, except that a sodium compound $Na_2CO_3$ was mixed with an $Ni_{0.35}Mn_{0.65}(OH)_2$ precursor in the (Na/M) equivalents in Table 2 below in the process of preparing a sodium composite transition metal oxide.

[Table 2]

| Input Na/M | (Before coating) Residual Na (ppm) | | | Low magnificatio n (x1.00K) | High magnification (x5.00K) | | Coating uniformity | |
|---|---|---|---|---|---|---|---|---|
|  | NaOH | $Na_2CO_3$ | Na | 1st point | 1 st/2nd/3rd/4th point | 4 point average | Standard deviation | RSD |
| 0.61 | 4103.9 | 8013.6 | 5835.3 | 3.4 | 3.3/3.5/3.4/3.5 | 3.425 | 0.083 | 2.421 |
| 0.64 | 6231.1 | 10231.5 | 8020.1 | 3.3 | 3.6/3.5/3.3/3.4 | 3.45 | 0.112 | 3.241 |
| 0.67 | 9037.8 | 13532.9 | 11065.6 | 3.4 | 3.3/3.4/3.3/3.5 | 3.375 | 0.083 | 2.457 |
| 0.7 | 15798.8 | 15199.2 | 15674.6 | 3.4 | 3.3/3.4/3.4/3.5 | 3.4 | 0.071 | 2.080 |
| 0.73 | 29386.3 | 15835.1 | 23760.4 | 3.2 | 1.4/4.8/5.1/0.8 | 3.025 | 1.940 | 64.118 |
| 0.76 | 46196.1 | 17213.5 | 34020.4 | 3 | 3.8/0.8/0.6/5.2 | 2.6 | 1.965 | 75.565 |

Referring to Table 2, in the case of a positive electrode active material prepared at Na/M equivalents ranging from 0.66 to 0.71, which is the desirable range, i) the total amount of residual Na is appropriate, ii) the weight ratio ($NaOH/Na_2CO_3$) of sodium hydroxide to sodium carbonate in residual sodium is 67 to 104, and since NaOH, which can be used to replace the basic material (NaOH) input additionally to satisfy the optimal pH of 11 to 12 for co-precipitation, can be self-applied on the residual sodium, i') a uniform coating is possible, and ii') the residual sodium can be maximally utilized, which has the effect of simplifying the process and improving process costs.

In addition, in the case of a positive electrode active material prepared at Na/M equivalents exceeding 0.7, it was analyzed that i) the total amount of the residual Na increases excessively, and ii) the weight ratio ($NaOH/Na_2CO_3$) of

sodium hydroxide to sodium carbonate among residual sodium excessively increases to 185.6 and 268.4, and as the co-precipitation coating reaction progresses in a state exceeding the optimal pH of 11 to 12 for co-precipitation, coating uniformity deteriorates.

In addition, in the case of the positive electrode active material prepared at Na/M equivalents ranging from 0.61 to 0.67, the ($NaOH/Na_2CO_3$) weight ratio is 51 and 61, and the proportion of $Na_2CO_3$, which is a relatively weak base, increases, and thus as the pH of the water washing solution in washing operation a) decreases, the additional amount of basic material (NaOH) input to the co-precipitation coating increases, so it was analyzed that there is a problem that it makes it difficult to use residual sodium, and the process complexity and process costs increase.

Experimental Example 3: Analysis of unreacted residual Na content

To measure the amount of residual sodium, 1 g of sodium composite transition metal oxide was immersed in 5 g of distilled water, stirred for 5 minutes, and the filtrate was titrated with 0.1 M HCl, and the unreacted sodium by-products remaining on the particle surface were analyzed by measuring the volume of HCl input until the pH of the filtrate reached 5.

The content of residual sodium was measured for each compound (for example, NaOH or $Na_2CO_3$) including residual Na using a potentiometric neutralization titration method, and then the total amount of only Na was calculated separately to obtain the value (TTS, total sodium). The calculation method is as shown in Calculation Formula 1 below.

TTS (total Na) = NaOH analysis value (%) x $Na/NaOH$ + $Na_2CO_3$ analysis value (%) x $2Na/Na_2CO_3$

[Table 3]

| Example 1 | NaOH (ppm) | $Na_2CO_3$ (ppm) | Total Na (ppm) |
|---|---|---|---|
| Before Co coating | 12,311 | 5,419 | 9,427 |
| After Co coating | 450 | 2,115 | 1,176 |

Referring to Table 3, when comparing before and after Co coating, it was analyzed that NaOH was removed at a relatively large rate compared to $Na_2CO_3$, which reduces the amount of basic materials used in Co co-precipitation coating by maximally utilizing NaOH among the sodium by-products remaining on the surface.

Experimental Example 4: Electrochemical performance evaluation of sodium secondary battery

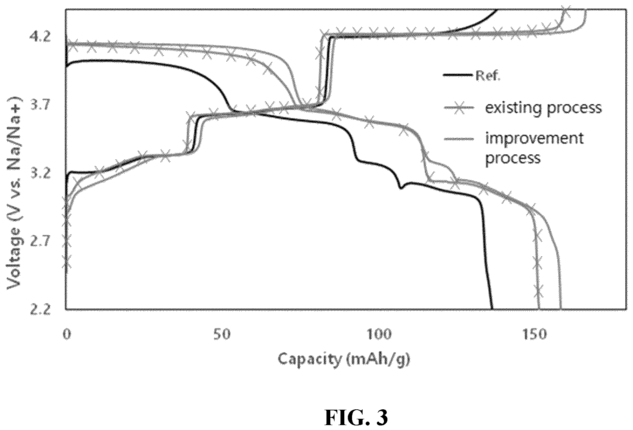

For the sodium secondary batteries manufactured in Example 1, Comparative Example 1, and Reference, the 1st charge/discharge capacity was measured after charging/discharging once under conditions of 25 °C, an operating voltage range of 2.0 V to 4.6 V, and 0.1 C/0.5 C, and the results are shown in FIG. 3.

Referring to FIG. 3, it was confirmed that the Co-coated positive electrode active material to which the manufacturing method of the present invention was applied had a uniform and capacitive coating layer formed over the entire particle surface and enhanced surface stability, resulting in improved capacity and lifespan (capacity retention rate) characteristics compared to the reference.

On the other hand, in the case of Comparative Example 2, the non-uniformly formed Co coating layer acted as a resistance layer, resulting in no improvement in discharge capacity and a deteriorated capacity retention rate.

According to the present invention, in a positive electrode active material for a sodium secondary battery, the water washing process for removing sodium by-products remaining on the particle surface and the coating process for improving surface defects and enhancing performance can be performed simultaneously to simplify the process and reduce production time and process costs.

In addition, according to the present invention, by forming a uniform and capacitive coating layer over the entire surface of a positive electrode active material for a sodium secondary battery, surface stability can be enhanced, and battery performance such as capacity and lifespan characteristics can be improved.

As described above, although the present invention has been shown and described with respect to specific embodiments, it will be apparent to those skilled in the art that the present invention can be modified and changed in various ways to the extent that it does not depart from the following claims.

**Claims**

**1.** A method of preparing a positive electrode active material for a sodium secondary battery, comprising:

a) inputting a sodium composite transition metal oxide and a water washing solution into a reactor and stirring the reactants to dissolve residual sodium on the surface of the sodium composite transition metal oxide in the water washing solution;

b) inputting a cobalt salt into the reactor and performing stirring to co-precipitate cobalt hydroxide onto the sodium composite transition metal oxide particles; and

c) heat-treating the sodium composite transition metal oxide particles on which the cobalt hydroxide is formed to form a cobalt coating layer on the particles.

2. The method of claim 1, wherein in operation a), the sodium composite transition metal oxide is prepared by mixing a transition metal hydroxide precursor and a sodium compound in an Na/M (M=total metals excluding Na) molar ratio of 0.6 to 0.72 and sintering the mixture.

3. The method of claim 1 or 2, wherein in operation a), the sodium composite transition metal oxide includes a combination of sodium hydroxide (NaOH) and sodium carbonate ($Na_2CO_3$) as sodium by-products remaining on the surface of the oxide particles, and

the sodium composite transition metal oxide includes residual sodium in a weight ratio of sodium hydroxide to sodium carbonate ($NaOH/Na_2CO_3$) of 50 to 110.

4. The method of one of claims 1 to 3, wherein in operation a), the pH of the reactants is increased from pH 6 to 8 to pH 10 to 12 while stirring proceeds in the reactor.

5. The method of one of claims 1 to 4, wherein in operation a), the sodium composite transition metal oxide has a residual sodium content (TTS: total sodium, ppm) of 3,000 to 20,000 ppm.

6. The method of one of claims 1 to 5, wherein operation b) includes:

b1) when a content of cobalt element included in the cobalt oxide coating layer is 2 mol% or less based on the total metals (M) excluding sodium of the sodium composite transition metal oxide,
inputting the cobalt salt and stirring without inputting a sodium-containing basic material; and
b2) when a content of cobalt element included in the cobalt oxide coating layer is more than 2 mol% based on the total metals (M) excluding sodium of the sodium composite transition metal oxide,
inputting a cobalt salt (CS 1) and stirring without inputting the sodium-containing basic material when a cumulative cobalt element content (Co'/M) input into the reactor is 0 to 2 mol%, and
inputting and stirring a cobalt salt (CS2) and the sodium-containing basic material together from the point in time when the cumulative cobalt element content (Co'/M) input into the reactor exceeds 2 mol%.

7. The method of claim 6, wherein the cobalt hydroxide co-precipitation of operation b) further includes b3) stopping the input of the cobalt salt or the cobalt salt and sodium-containing basic material, and stirring the material input into the reactor for 1 to 10 min after operation b1) or operation b2).

8. The method of claim 6 or 7, wherein the residual sodium in operation a) and the sodium-containing basic material in operation b2) are materials that are partially or fully ionized in the water washing solution and exhibit basicity, and the cobalt salt in operation b) is a material that is partially or fully ionized in the water washing solution and exhibits acidity.

9. A positive electrode active material for a sodium secondary battery comprising a plurality of sodium composite transition metal oxide particles including a cobalt oxide coating layer formed on the surface and/or inside the particles, wherein the plurality of sodium composite transition metal oxide particles have a relative standard deviation (RSD) of less than 30 of the atomic molar ratio (Co/M) of cobalt to total metals (M) excluding sodium at 4 random points selected through EDS mapping analysis.

10. The positive electrode active material of claim 9, wherein the plurality of sodium composite transition metal oxide particles have an RSD of 2 to 20 of the atomic molar ratio (Co/M) of cobalt to total metals (M) excluding sodium at 4 random points selected through EDS mapping analysis.

11. The positive electrode active material of claim 9 or 10, wherein the sodium composite transition metal oxide is a sodium manganese-based oxide including at least sodium, nickel, and manganese.

12. The positive electrode active material of one of claims 9 to 11, wherein the sodium composite transition metal oxide is represented by the following Chemical Formula 1:

[Chemical Formula 1] $Na_aNi_xM1_yM2_zMn_{1-x-y-z}O_2$

in Chemical Formula 1,
M1 is Co or Fe,
M2 is at least one selected from Co, P, Sr, Ba, Ti, Zr, Mn, Al, W, Ce, Hf, Ta, Cr, F, Mg, Cr, V, Fe, Zn, Si, Y, Ga, Sn, Mo, Ge, Nd, B, Nb, Gd, and Cu,
M1 and M2 are different elements, and

$$0.50 \leq a \leq 0.80, \ 0.05 \leq x \leq 0.45, \ 0 \leq y \leq 0.45, \ 0 \leq z \leq 0.1, \text{ and } 0.55 \leq 1\text{-}x\text{-}y\text{-}z \leq 0.85.$$

13. The positive electrode active material of claim 9, wherein the cobalt oxide coating layer includes sodium cobalt oxide ($NaCoO_2$), cobalt oxide ($Co_2O_3$), or a combination thereof; and/or wherein a content of cobalt element (Co) included in the cobalt oxide coating layer is 0.1 to 10 mol% based on the total metals (M) excluding sodium of the sodium composite transition metal oxide; and/or wherein the plurality of sodium composite transition metal oxide particles including a cobalt oxide coating layer formed on the surface and/or inside the particles include a residual sodium content of 10,000 ppm or less.

14. A positive electrode for a sodium secondary battery comprising the positive electrode active material of one of claims 9 to 13.

15. A sodium secondary battery comprising the positive electrode of claim 15; a negative electrode; and an electrolyte.

**FIG. 1A**

**RSD = 2.08**

**3.3%**

**3.4%**

**3.4%**

**3.5%**

**FIG. 1B**

**FIG. 2A**

4.0%     1.0%

0.5%     0.6%

RSD = 1.347

**FIG. 2B**

**FIG. 3**

Europäisches
Patentamt

European
Patent Office

Office européen
des brevets

# EUROPEAN SEARCH REPORT

Application Number

EP 24 19 7846

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 028 215 A (ZHEJIANG POWER NEW ENERGY CO LTD) 9 September 2022 (2022-09-09) * paragraph [0023] - paragraph [0026]; claims; examples * ----- | 9-15 | INV. C01G53/82 H01M4/00 |
| X | CN 115 432 745 A (PANZHIHUA IRON & STEEL RES INST PANGANG GROUP) 6 December 2022 (2022-12-06) * claims; examples * ----- | 9-15 | |
| X | CN 116 314 704 A (ANHUI DEYI ENERGY TECH CO LTD) 23 June 2023 (2023-06-23) * claims; examples * ----- | 9-11, 13-15 | |
| Y | | 1-8 | |
| Y | CN 114 843 498 B (BEIJING EASPRING MAT TECH CO LTD) 2 June 2023 (2023-06-02) * page 8 - page 13; claims; examples * ----- | 1-8 | |

| | |
|---|---|
| | **TECHNICAL FIELDS SEARCHED (IPC)** |
| | C01G H01M |

The present search report has been drawn up for all claims

| Place of search | Date of completion of the search | Examiner |
|---|---|---|
| Munich | 13 February 2025 | Doslik, Natasa |

EPO FORM 1503 03.82 (P04C01)

**ANNEX TO THE EUROPEAN SEARCH REPORT
ON EUROPEAN PATENT APPLICATION NO.**                      EP 24 19 7846

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2025

| Patent document cited in search report | | Publication date | Patent family member(s) | Publication date |
|---|---|---|---|---|
| CN 115028215 | A | 09-09-2022 | NONE | |
| CN 115432745 | A | 06-12-2022 | NONE | |
| CN 116314704 | A | 23-06-2023 | NONE | |
| CN 114843498 | B | 02-06-2023 | CN 114843498 A | 02-08-2022 |
| | | | EP 4343891 A1 | 27-03-2024 |
| | | | JP 2024526435 A | 18-07-2024 |
| | | | KR 20240013213 A | 30-01-2024 |
| | | | US 11984591 B1 | 14-05-2024 |
| | | | WO 2023169591 A1 | 14-09-2023 |

EPO FORM P0459

For more details about this annex : see Official Journal of the European Patent Office, No. 12/82